# EUROPÄISCHE PATENTSCHRIFT

(11) **EP 0 926 359 B1**
(45) Veröffentlichungstag und Bekanntmachung des Hinweises auf die Patenterteilung: **17.09.2003**
(21) Anmeldenummer: 98811117.5
(22) Anmeldetag: 09.11.1998
(51) Int. Cl.: F16B 13/08

(54) **Hinterschnittdübel**
Dowel for an undercut anchor hole
Cheville pour trou d'ancrage à contre-dépouille

(30) Priorität: 20.12.1997 DE 19756997
(43) Veröffentlichungstag der Anmeldung: 30.06.1999
(73) Patentinhaber: HILTI Aktiengesellschaft, 9494 Schaan (LI)
(72) Erfinder: Kaibach, Werner, Dipl.-Ing, 86807 Buchloe (DE); Raber, Stefan, Dr.Ing., 86916 Kaufering (DE)
(74) Vertreter: Wildi, Roland

(56) Entgegenhaltungen:
- EP-A- 0 067 941
- EP-A- 0 195 188
- EP-A- 0 528 679
- US-A- 3 479 072

## Beschreibung

Die Erfindung betrifft einen Hinterschnittdübel gemäss dem Oberbegriff des Patentanspruchs 1.

In der Befestigungstechnik besteht vielfach der Wunsch nach weitgehend spreizdruckfreien Befestigungen. Insbesondere bei geringen Achs- und Randabständen besteht bei Verankerungen mit konventionellen Spreizdübeln die Gefahr von Rissen und sogar Abplatzern im Untergrund. Für derartige abstandskritische Befestigungen sind Verankerungssysteme bekannt, bei denen ein speziell ausgebildetes Befestigungselement formschlüssig in einem vorbereiteten Bohrloch verankert wird. Dazu wird das Bohrloch in einer definierten Tiefe mit einer Hinterschneidung versehen. Das in das vorbereitete Bohrloch einsetzbare Befestigungselement umfasst eine Ankerstange mit einem sich zum freien Vorderende im Durchmesser erweiternden Kopfteil und eine Hülse mit durch axiale Schlitze voneinander getrennten Spreizsegmenten. Durch eine Relativverschiebung zwischen der Hülse und der Ankerstange sind die auf das Kopfteil auflaufenden Spreizsegmente radial in die Hinterschneidung ausstellbar.

Zur Herstellung der Hinterschneidung werden vielfach spezielle Hinterschnittwerkzeuge verwendet, die mit exzentrisch im Bohrloch umlaufenden Schneiden ausgestattet sind und in einer vorbestimmten Tiefe des zuvor erstellten Bohrlochs fräsend, schabend Material von der Bohrlochwand abtragen, um dieses im gewünschten Umfang zu erweitem. Es sind auch Hinterschnittdübel bekannt, die sich während des Setzvorgangs selbsttätig eine Hinterschneidung im Bohrloch erzeugen. Bei einer beispielsweise aus der DE-A-31 46 027 bekannten Variante der Hinterschnittdübel erfolgt die Erzeugung der Hinterschneidung durch ein meisselndes Abtragen des Materials von der Bohrlochwand infolge der Axialverschiebung der Hülse entlang der sich am Bohrlochgrund abstützenden Ankerstange. Ein anderer Typ eines Hinterschnittdübels ist aus der EP-B-0 217 053 bekannt und erzeugt die Hinterschneidung durch eine fräsend, schabende Bearbeitung der Bohrlochwand. Dazu wird die Hülse während ihres axialen Vortriebs auf das Kopfteil der sich am Bohrlochgrund abstützenden Ankerstange zusätzlich rotiert. Die Spreizlappen sind mit Schneiden ausgestattet, die bei der Rotation das Material von der Bohrlochwand abtragen und die Hinterschneidung erzeugen.

Während des Setzvorgangs stützen sich die Ankerstangen dieser bekannten Hinterschnittdübel am Bohrlochgrund ab. Um für das von der Bohrlochwand meisselnd bzw. fräsend schabend abgetragene Material Raum zu schaffen, weisen die Ankerstangen im Anschluss an das Kopfteil einen zylindrischen Stützzapfen auf, der axial vom Kopfteil absteht und einen Durchmesser aufweist, der wesenlich kleiner ist als der grösste Durchmesser des Kopfteils. Der Stützzapfen weist eine relativ grosse Länge auf, was bedingt, dass das Bohrloch um einiges tiefer gebohrt werden muss, als für die Länge des Hinterschnittdübels eigentlich zu erwarten wäre. Der Durchmesser des Stützzapfens entspricht etwa dem Nenndurchmesser der Ankerstange. Während des Setzvorgangs besteht die Gefahr, dass der Stützzapfen infolge der von der Hülse auf das Kopfteil und den Stützzapfen übertragenen axialen Schläge in den Grund des Bohrlochs eindringt. Dadurch wird die Schnittkurve, die bei der Erzeugung der Hinterschneidung von den abtragenden Schneiden der Spreizlappen beschrieben wird, negativ beeinflusst. Die Folge ist ein unglelchmässiges Anliegen der Spreizlappen in der Hinterschneidung. Dies kann dazu führen, dass bei Belastung örtlich die erlaubte Flächenpressung zwischen den Spreizlappen und dem Untergrund überschritten wird und an den betroffenen Stellen eine lokale Zerstörung des Untergrunds erfolgt. Dadurch ist die Leistungsfähigkeit des Dübelsystems eingeschränkt und können die erzielbaren Haltewerte des formschlüssig Im Untergrund verankerten Hinterschnittdübels deutlich verringert sein. Es sind zwar auch Hinterschnittdübel bekannt, bei denen durch einen Verzicht auf einen an das Kopfteil anschliessenden Stützzapfen ein Eindringen in den Bohrlochgrund verhindert werden soll. Diese Hinterschnittdübel weisen aber den Nachteil auf, dass sie keinen Raum für das von der Bohrlochwand abgebaute Material bieten. Das kann dazu führen, dass die Spreizlappen der Hülse nicht vollständig radial ausgestellt werden können und demzufolge der Hinterschnittdübel nicht vollständig gesetzt wird. Dies hat wiederum negative Auswirkungen auf die erzielbaren Haltewerte.

Aufgabe der vorliegenden Erfindung ist es daher, diesen Nachteilen der selbstschneidenden Hinterschnittdübel des Stands der Technik abzuhelfen. Es soll ein Hinterschnittdübel geschaffen werden, der zuverlässig und vollständig setzbar ist. Eine Behinderung des Setzvorgangs durch das von der Bohrlochwand abgetragene Material soll verhindert werden. Die Spreizlappen des Hinterschnittdübels sollen nach dem Setzvorgang möglichst gleichmässig in der Hinterschneidung anliegen. Lokale Überbelastungen des Untergrunds sollen vermieden werden können. Es soll die Voraussetzung dafür geschaffen werden, dass die Ankerstange beim Setzvorgang weitgehend ungehindert mitdrehen kann, um Beschädigungen des Aussengewindes der Ankerstange zu verhindem. Dabei soll die erforderliche Bohrtiefe für das Bohrloch möglichst klein gehalten werden.

Die Lösung dieser Aufgaben besteht in einem Hinterschnittdübel mit den im kennzeichnenden Abschnitt des Patentanspruchs 1 angeführten Merkmalen. Der erfindungsgemässe Hinterschnittdübel umfasst eine Ankerstange, deren eines Ende mit einem Lastangriffsmittel, beispielsweise einem Aussengewinde, ausgestattet ist und die am gegenüberliegenden Ende ein Kopfteil aufweist, das sich in Richtung des freien Vorderendes der Ankerstange im Durchmesser erweitert. Eine Hülse, die durch Längsschlitze voneinander getrennte Spreizlappen aufweist, ist entlang der Ankerstange axial verschiebbar. Bei der Axialverschiebung laufen die Spreizlappen auf das Kopfteil auf und sind radial ausstellbar. Das Kopfteil besitzt eine im wesentlichen ballige Geometrie. An einen durchmessergrössten Bereich des Kopfteils schliessen wenigstens zwei Abschnitte an, die sich in Setzrichtung verjüngen. Die sich verjüngenden Abschnitte weisen Ringflächen auf, deren mittlere Neigungswinkel gegenüber der Achse der Ankerstange in Setzrichtung zunehmen.

Durch die erfindungsgemässe Ausbildung des Kopfteils kann ein axiales Eindringen in den Grund des Bohrlochs verhindert werden. Das Kopfteil weist während des gesamten Setzvorgangs eine definierte Lage auf. Dadurch sind die Voraussetzungen für eine möglichst gute Übereinstimmung von Schneid- und Schleppkurve der radial ausgestellten Spreizlappen gegeben, um eine möglichst gleichmässige Anlage der Spreizlappen in der erzeugten Hinterschnittbohrung zu erzielen. Durch die spezielle, ballige Ausbildung des Kopfteils mit wenigstens zwei an den durchmessergrössten Bereich anschliessenden, sich verjüngenden Abschnitten wird in der Umgebung des Kopfteils auch Raum für das von den Spreizlappen von der Bohrlochwand abgebaute Material geschaffen. Dadurch ist sichergestellt, dass das abgebaute Material den Setzvorgang nicht behindern kann. Dadurch kann die Baulänge des Kopfteils gesamthaft verringert werden, und es nicht mehr erforderlich, ein Bohrloch vorzubereiten, dessen Tiefe die Nennlänge des Hinterschnittankers wesentlich überschreitet Durch die erfindungsgemässe Geometrie des Kopfteils ist die Voraussetzung für ein Mitrotieren der Ankerstange bei schlagenddrehend verankerbaren Hinterschnittsystemen gegeben. Dadurch ist die Gefahr einer Beschädigung der Ankerstange durch die zwangsgedrehte Hülse im Bereich der Lastangriffsmittel reduziert.

Eine weitgehend flächige Auflage des Kopfteils auf dem Bohrlochgrund ergibt sich, wenn der Neigungswinkel der Ringfläche des vordersten Abschnitts mit der Achse der Ankerstange einen Winkel einschliesst, der im wesentlichen mit dem Bohrerwinkel der für die Bohrlochherstellung üblicherweise eingesetzten Bohrwerkzeuge übereinstimmt. Indem der Neigungswinkel der Ringfläche des vordersten Abschnitts des Kopfteils zu etwa 50° bis etwa 80° gewählt wird, wird ein Grossteil der Bohrerwinkel der üblichen Bohrwerkzeuge abgedeckt.

Aus Gründen der Optimierung der Gesamtlänge des Hinterschnittdübels erweist es sich von Vorteil, dass der vorderste Abschnitt eine Länge aufweist, die zur Gesamtlänge des an den durchmessergrössten Bereich anschliessenden Teils des Kopfteils ein Verhältnis aufweist, das etwa 0,1 bis etwa 0,8, vorzugsweise 0,2 bis 0,5, beträgt.

Der durchmessergrösste Bereich des Kopfteils weist einen Durchmesser auf, der 0 mm bis 3 mm, vorzugsweise 0,5 mm bis 1,5 mm kleiner ist als der grösste Aussendurchmesser der Hülse. Nach dem Einsetzten des Hinterschnittdübels in das Bohrloch verblelbt auf diese Weise zwischen der Bohrlochwand und dem Kopfteil ein Ringspalt, der den Abtransport des von der Bohrlochwand abgetragenen Materials aus dem Angriffsbereich der schneidenden Vorderenden der Speizlappen begünstigt.

In einer Variante der Erfindung ist der durchmessergrösste Bereich im wesentlichen zylindrisch ausgebildet und weisen die daran anschliessenden Abschnitte eine kegelstumpfförmige Geometrie auf. Aus fertigungstechnischer Sicht erscheinen zwei aufeinanderfolgende, kegelstumpfförmige Abschnitte von Vorteil. Die kleinsten Durchmesser der zwei Abschnitte stehen zueinander in einem Verhältnis von etwa 1,5 bis etwa 3,5, vorzugsweise 1,8 bis 3,2. Dabei weisen der Durchmesser des zylindrischen Bereichs und der kleinste Durchmesser des an den zylindrischen Bereich anschliessenden kegelstumpfförmigen Abschnitts ein Verhältnis zwischen etwa 1,2 und etwa 2,0, vorzugsweise 1,3 und 1,8 auf.

In einer alternativen Ausführungsvariante, die sich insbesondere für die Herstellung des Kopfteils in einem Kaltumformverfahren anbietet, weisen der durchmessergrösste Bereich und die daran anschliessenden, sich verjüngenden Abschnitte in axiale Richtung gekrümmt verlaufende Mantelflächen auf. Insbesondere sind zwei sich verjüngende Abschnitte vorgesehen. Für den Krümmungsradius des vordersten Abschnitts gilt 0 mm < t ≤ 12 mm, vorzugsweise 2 mm ≤ t ≤ 10 mm. Für den Krümmungsradius des zwischen dem durchmessergrössten Bereich und dem vordersten Abschnitt angeordneten Abschnitt gilt 0 mm < s ≤ 20 mm, vorzugsweise 5 mm ≤ s ≤ 15 mm. Der Krümmungsradius des durchmessergrössten Bereichs des Kopfteils beträgt dabei etwa 0,1 mm bis 6 mm, vorzugsweise 1 mm bis 4 mm.

Im folgenden wird die Erfindung mit Bezugnahme auf die in den Figuren schematisch dargestellten Ausführungsbeispiele näher erläutert. Es zeigen:
Fig. 1 einen Abschnitt eines Hinterschnittdübels mit einer ersten Variante eines Kopfteils im teilweisen Axialschnitt; und
Fig. 2 einen Abschnitt eines Hinterschnittdübels mit einer zweiten Variante des Kopfteils im teilweisen Axialschnitt.

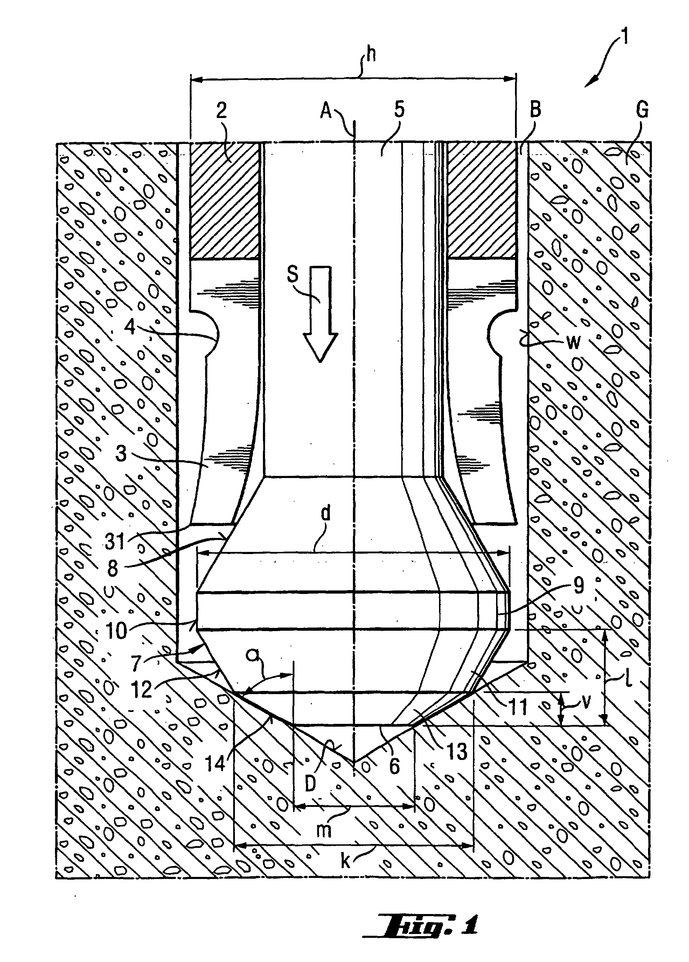

Der in Fig. 1 dargestellte Hinterschnittdübel ist gesamthaft mit dem Bezugszeichen 1 versehen. Der Hinterschnittdübel 1 ist in ein vorbereitetes Bohrloch B im Untergrund G eingesetzt. Die Bohrlochwand trägt das Bezugszeichen W. Der Grund des Bohrlochs ist mit D bezeichnet. Die Setzrichtung ist durch den Pfeil S angedeutet. Der Hinterschnittdübel 1 umfasst eine Ankerstange 5, die an ihrem einen, rückwärtigen Ende Lastangriffsmittel zum Anschluss eines Bauteils aufweist. Beispielsweise sind die Lastangriffsmittel ein Aussengewinde. An ihrem gegenüberliegenden Ende ist die Ankerstange 5 mit einem Kopfteil 7 ausgestattet, das sich in Richtung des freien Vorderendes 6 der Ankerstange im Durchmesser erweitert. Eine Hülse 2, die auf die Ankerstange 5 geschoben ist, besitzt durch Längsschlitze voneinander getrennte Spreizlappen 3. Die Hülse 2 ist entlang der Ankerstange 5 axial verschiebbar. Beim Vortreiben der Hülse 2 in Setzrichtung S laufen die Spreizlappen 3 gegen eine Auflauffläche 8 des Kopfteils 7. Die Auflauffläche 8 besitzt eine im wesentlichen kegelförmige Geometrie. Beim weiteren Vortreiben der Hülse 2 durch axiale Schläge auf ihren rückwärtigen Endabschnitt gleiten die Spreizlappen 3 entlang der Auflauffläche 8 und werden radial ausgestellt. Dabei können die vorlaufenden Kanten 31 der Spreizlappen 3 oder an den Spreizlappen 3 vorgesehene Schneidbereiche bzw. Schneiden Material von der Bohrlochwand W abtragen. Wird die Hülse nur durch axiale Schläge vorgetrieben, erfolgt der Materialabbau meisselnd. Bei einer gleichzeitigen Rotation der Hülse wird das Material zusätzlich fräsend, schabend abgetragen.

Das Kopfteil 7 erweitert sich im Durchmesser bis zu einem grössten Durchmesser d, der in einem im wesentlichen zylindrischen Bereich 9 mit einer zylindrischen Aussenfläche 10 beibehalten wird. Der Durchmesser d des zylindrischen Bereichs 9 des Kopfteils 7 ist um etwa 0 mm bis 3 mm, vorzugsweise 0,5 mm bis 1,5 mm kleiner als ein grösster Aussendurchmesser h der Hülse 2. Im Anschluss an den zylindrischen Bereich 9 sind zwei im wesentlichen kegelstumpfförmige Abschnitte 11, 13 angeordnet. Die Ringflächen 12, 14 der kegelstumpfförmigen Abschnitte 11, 13 weisen Durchmesser auf, die sich zum freien Ende 6 der Ankerstange verringem. Die Neigungswinkel der Ringflächen 12, 14 gegenüber der Achse A der Ankerstange 5 nehmen zum freien Vorderende 6 der Ankerstange 5 zu. Der Neigungswinkel α der vorderen Ringfläche 14 entspricht vorzugsweise dem Bohrerwinkel der üblichen Bohrwerkzeuge und beträgt etwa 50° bis etwa 80°. Auf diese Weise ausgebildet stimmt der Neigungswinkel der vorderen Ringfläche 14 weitgehend mit dem Neigungswinkel des Bohrlochgrunds D überein, und der Kopf 7 der Ankerstange 5 kann sich beim Setzvorgang flächig abstützen.

Der vordere Abschnitt 13 weist eine Länge v auf, die zur Gesamtlänge 1 der an den zylindrischen Bereich 9 anschliessenden Abschnitte 11, 13 im Verhältnis von etwa 0,1 bis etwa 0,8 steht. Der an den zylindrischen Bereich 9 anschliessende kegelstumpfförmige Abschnitt 11 besitzt einen kleinsten Durchmesser k, der zum kleinsten Durchmesser m des vorderen Abschnitts 13 im Verhältnis von etwa 1,5 bis etwa 3,5, vorzugsweise 1,8 bis 3,2 steht Der Durchmesser d des zylindrischen Bereichs 9 steht zum kleinsten Durchmesser k des anschliessenden Kegelstumpfbereichs 11 im Verhältnis von etwa 1,2 bis etwa 2,0, vorzugsweise 1,3 bis 1,8.

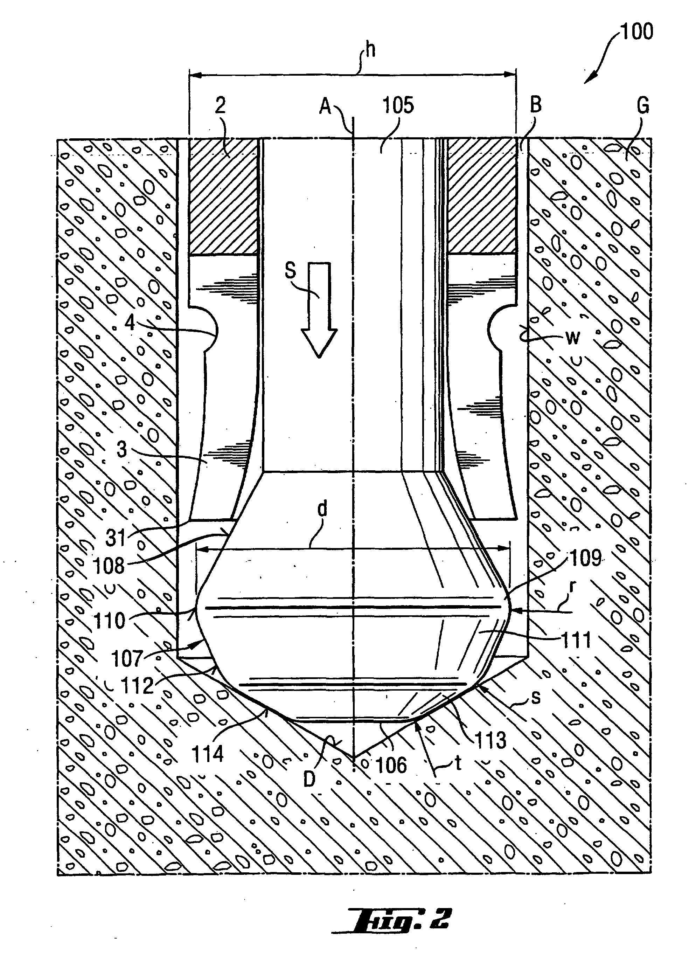

Fig. 2 zeigt einen Hinterschnittdübel 100, der ein gegenüber dem Ausführungsbeispiel gemäss Fig. 1 modifiziertes Kopfteil 107 aufweist. Die Bezugszeichen für die Hülse entsprechen den Bezugszeichen aus Fig. 1. Die Bezugszeichen für die Ankerstange sind zur Unterscheidung gegenüber den Bezugszeichen aus Fig. 1 um die Zahl 100 erhöht. Das ballig ausgebildete Kopfteil 107 besitzt im durchmessergrössten Bereich 109 eine in axiale Richtung A gekrümmte Aussenfläche 110. Die beiden daran anschliessenden, sich in Richtung des freien Vorderendes 106 der Ankerstange 105 verjüngenden Abschnitte 111, 113 weisen gleichfalls in axiale Richtung A gekrümmte Ringflächen 112, 114 auf. Die Krümmungsradien r, s und t sind derart gewählt, dass die folgenden Beziehungen gelten:
0 mm < t ≤ 12 mm, vorzugsweise 2 mm ≤ t ≤ 10 mm, für den Krümmungsradius t der Ringfläche 114 des vordersten Abschnitts 113;
0 mm < s ≤ 20 mm, vorzugsweise 5 mm ≤ s ≤ 15 mm, für den Krümmungsradius s der Ringfläche 112 des zwischen dem durchmessergrössten Bereich 109 und dem vorderen Abschnitt 113 liegenden Abschnitts 111;
0,1 mm ≤ r ≤ 6 mm, vorzugsweise 1 mm ≤ r ≤ 4 mm, für den Krümmungsradius r der Aussenfläche 110 des durchmessergrössten Bereichs 109.
Hinsichtlich der Längenverhältnisse der an den durchmessergrössten Bereich 109 anschliessenden Abschnitte 111, 113 gelten die Beziehungen gemäss Fig. 1.

## Patentansprüche

1. Hinterschnittdübel mit einer Ankerstange (5), deren eines Ende mit einem Lastangriffsmittel, beispielsweise einem Aussengewinde, ausgestattet ist und die am gegenüberliegenden Ende ein Kopfteil (7) aufweist, das sich in Richtung des freien Vorderendes (6) der Ankerstange (5) im Durchmesser erweitert, und einer Hülse (2), die entlang der Ankerstange (5)- axial verschiebbar ist und durch Längsschlitze voneinander getrennte Spreizlappen (3) aufweist, die beim Auflaufen auf das Kopfteil (7) radial ausstellbar sind, **dadurch gekennzeichnet, dass** das Kopfteil (7) eine im wesentlichen ballige Geometrie besitzt und an einen durchmessergrössten Bereich (9) des Kopfteils wenigstens zwei Abschnitte (11, 13) anschliessen, die sich in Setzrichtung (S) verjüngen, wobei die sich verjüngenden Abschnitte (11, 13) Ringflächen (12, 13) aufweisen, deren mittlere Neigungswinkel gegenüber der Achse (A) der Ankerstange (5) in Setzrichtung (S) zunehmen.

2. Hinterschnittdübel nach Anspruch 1, **dadurch gekennzeichnet, dass** der Neigungswinkel (α) der Ringfläche (14) des vordersten Abschnitts (13) des Kopfteils (7) etwa 50° bis etwa 80° beträgt.

3. Hinterschnittdübel nach Anspruch 1 oder 2, **dadurch gekennzeichnet, dass** der vorderste Abschnitt (13) eine Länge (v) aufweist, die zur Gesamtlänge (I) des an den durchmessergrössten Bereich (9) anschliessenden Teils (11, 13) des Kopfteils (7) ein Verhältnis aufweist, das zwischen etwa 0,1 und etwa 0,8, vorzugsweise zwischen 0,2 und 0,5, liegt.

4. Hinterschnittdübel nach einem der vorangehenden Ansprüche, **dadurch gekennzeichnet, dass** der durchmessergrösste Bereich (9) des Kopfteils (7) einen Durchmesser (d) aufweist, der 0 mm bis 3 mm, vorzugsweise 0,5 mm bis 1,5 mm kleiner ist als der grösste Aussendurchmesser (h) der Hülse.

5. Hinterschnittdübel nach einem der vorangehenden Ansprüche, **dadurch gekennzeichnet, dass** der durchmessergrösste Bereich (9) im wesentlichen zylindrisch ausgebildet ist und die daran anschliessenden Abschnitte (11, 13) eine kegelstumpfförmige Geometrie aufweisen.

6. Hinterschnittdübel nach Anspruch 5, **dadurch gekennzeichnet, dass** zwei kegelstumpfförmige Abschnitte (11, 13) vorgesehen sind, deren kleinste Durchmesser (k, m) zueinander im Verhältnis von etwa 1,5 bis etwa 3,5, vorzugsweise 1,8 bis 3,2 stehen, wobei der Durchmesser (d) des zylindrischen Bereichs (9) und der kleinste Durchmesser (k) des an den zylindrischen Bereich (9) anschliessenden kegelstumpfförmigen Abschnitts (11) ein Verhältnis zwischen etwa 1,2 und etwa 2,0, vorzugsweise 1,3 und 1,8 aufweisen.

7. Hinterschnittdübel nach einem der Ansprüche 1 bis 4, **dadurch gekennzeichnet, dass** die Mantelflächen (110, 112, 114) des durchmessergrössten Bereichs (109) und der daran anschliessenden, sich verjüngenden Abschnitte (111, 113) in axiale Richtung (A) gekrümmt ausgebildet sind.

8. Hinterschnittdübel nach Anspruch 7, **dadurch gekennzeichnet, dass** zwei sich verjüngende Abschnitte (111, 113) vorgesehen sind, wobei für den Krümmungsradius (t) des vordersten Abschnitts (113) gilt,
dass 0 mm < t ≤ 12 mm, vorzugsweise 2 mm ≤ t ≤ 10 mm;
für den Krümmungsradius (s) des zwischen dem durchmessergrössten Bereich (109) und dem vordersten Abschnitt (113) angeordneten Abschnitt (111) gilt,
dass 0 mm < s ≤ 20 mm, vorzugsweise 5 mm ≤ s ≤ 15 mm;
und dass der Krümmungsradius (r) des durchmessergrössten Bereichs (109) des Kopfteils (107) zwischen etwa 0,1 mm und 6 mm, vorzugsweise zwischen 1 mm und 4 mm, liegt.

9. Hinterschnittdübel nach einem der vorangehenden Ansprüche, **dadurch gekennzeichnet, dass** das Kopfteil im Kaltumformverfahren hergestellt ist.

## Claims

1. An undercut anchor comprising an anchor rod (5), one end of which is provided with load-application means, for example an external screw thread, and the opposite end having a head portion (7) which increases in diameter in direction of the free front end (6) of the anchor rod (5), and comprising a sleeve (2), which is axially displaceable along the anchor rod (5) and includes expansion tabs (3) which are separated from one another by longitudinal slots and can spread out in radial direction on running up against the head portion (7), **characterized in that** the head portion (7) has a substantially spherical geometry, and at least two portions (11, 13) follow on from the largest-diameter region (9) of the head portion and taper off in direction of setting (S), the tapering portions (11, 13) having annular faces (12, 13) with mean angles of inclination which increase in direction of setting (S) relative to the axis (A) of the anchor rod (5).

2. An undercut anchor according to Claim 1, **characterized in that** the angle of inclination (α) of the annular face (14) of the foremost portion (13) of the head portion (7) is approximately 50° to approximately 80°.

3. An undercut anchor according to Claim 1 or 2, **characterized in that** the foremost portion (13) has a length (v), the ratio of the length (v) to the total length (1) of the portion (11, 13) following on from the largest-diameter region (9) of the head portion (7) being between approximately 0.1 and approximately 0.8, and preferably between 0.2 and 0.5.

4. An undercut anchor according to one of the preceding claims, **characterized in that** the largest-diameter region (9) of the head portion (7) has a diameter (d), which is 0 mm to 3 mm, and preferably 0.5 mm to 1.5 mm, smaller than the largest external diameter (h) of the sleeve.

5. An undercut anchor according to one of the preceding claims, **characterized in that** the largest-diameter region (9) is substantially cylindrical in form and the adjoining portions (11, 13) have a truncated-cone-shaped geometry.

6. An undercut anchor according to Claim 5, **characterized in that** two truncated-cone-shaped portions (11, 13) are provided, their smallest diameters (k, m) being at a ratio to one another of approximately 1.5 to approximately 3.5, and preferably 1.8 to 3.2, the ratio of the diameter (d) of the cylindrical region (9) to the smallest diameter (k) of the truncated-cone-shaped portion (11) following on from the cylindrical region (9) being between approximately 1.2 and approximately 2.0, and preferably 1.3 and 1.8.

7. An undercut anchor according to one of Claims 1 to 4, **characterized in that** the outer surfaces (110, 112, 114) of the largest-diameter region (109) and of the adjoining tapering portions (111, 113) are curved in axial direction (A).

8. An undercut anchor according to Claim 7, **characterized in that** two tapering portions (111, 113) are provided, in which case
0 mm < t ≤ 12 mm, and preferably 2 mm ≤ t ≤ 10 mm,
applies in respect of the curve radius (t) of the foremost portion (113), and
0 mm < s ≤ 20 mm, and preferably 5 mm ≤ s ≤ 15 mm,
applies in respect of the curve radius (s) of the portion (111) disposed between the largest-diameter region (109) and the foremost portion (113),
and the curve radius (r) of the largest-diameter region (109) of the head portion (107) is between approximately 0.1 mm and 6 mm, and preferably between 1 mm and 4 mm.

9. An undercut anchor according to one of the preceding claims, **characterized in that** the head portion is made in a cold-forming operation.

## Revendications

1. Cheville à contre-dépouille comprenant une tige d'ancrage (5) dont l'une des extrémités est munie d'un moyen d'application de charge, par exemple d'un filetage extérieur, et qui comporte, à l'extrémité opposée, une partie de tête (7) dont le diamètre augmente en direction de l'extrémité avant libre (6) de la tige d'ancrage (5), et comprenant un manchon (2) qui est déplaçable axialement le long de la tige d'ancrage (5) et comporte des pattes expansibles (3) qui sont séparées les unes des autres par des fentes longitudinales et qui peuvent se déployer radialement en montant sur la partie de tête (7), **caractérisée en ce que** la partie de tête (7) possède une géométrie sensiblement bombée, et au moins deux portions (11, 13) qui se rétrécissent dans la direction de scellement (S) se raccordent à une zone de diamètre maximal (9) de la partie de tête, les portions rétrécies (11, 13) comportant des surfaces annulaires (12, 13) dont les angles d'inclinaison moyens par rapport à l'axe (A) de la tige d'ancrage (5) augmentent dans la direction de scellement (S).

2. Cheville à contre-dépouille selon la revendication 1, **caractérisée en ce que** l'angle d'inclinaison (α) de la surface annulaire (14) de la portion avant extrême (13) de la partie de tête (7) est d'environ 50° à environ 80°.

3. Cheville à contre-dépouille selon la revendication 1 ou 2, **caractérisée en ce que** la portion avant extrême (13) présente une longueur (v) qui, avec la longueur totale (1) de la partie (11, 13) de la partie de tête (7) raccordée à la zone de diamètre maximal (9), se trouve dans un rapport compris entre environ 0,1 et environ 0,8, de préférence entre 0,2 et 0,5.

4. Cheville à contre-dépouille selon une des revendications précédentes, **caractérisée en ce que** la zone de diamètre maximal (9) de la partie de tête (7) présente un diamètre (d) qui est inférieur de 0 mm à 3 mm, de préférence de 0,5 mm à 1,5 mm, au diamètre extérieur maximal (h) du manchon.

5. Cheville à contre-dépouille selon une des revendications précédentes, **caractérisée en ce que** la zone de diamètre maximal (9) est sensiblement de configuration cylindrique, et les portions (11, 13) qui s'y raccordent présentent une géométrie tronconique.

6. Cheville à contre-dépouille selon la revendication 5, **caractérisée en ce qu'**il est prévu deux portions tronconiques (11, 13) dont les diamètres minimaux (k, m) se trouvent dans un rapport mutuel d'environ 1,5 à environ 3,5, de préférence de 1,8 à 3,2, le diamètre (d) de la zone cylindrique (9) et le diamètre minimal (k) de la portion tronconique (11) raccordée à la zone cylindrique (9) présentant un rapport compris entre environ 1,2 et environ 2,0, de préférence 1,3 et 1,8.

7. Cheville à contre-dépouille selon une des revendications 1 à 4, **caractérisée en ce que** les surfaces périphériques (110, 112, 114) de la zone de diamètre maximal (109) et des portions rétrécies (111, 113) qui s'y raccordent sont courbées dans la direction radiale (A).

8. Cheville à contre-dépouille selon la revendication 7, **caractérisée en ce qu'**il est prévu deux portions rétrécies (111, 113), la relation prévalant pour le rayon de courbure (t) de la portion avant extrême (113) étant
0 mm < t ≤ 12 mm, de préférence 2 mm ≤ t ≤ 10 mm ;
pour le rayon de courbure (s) de la portion (111) située entre la zone de diamètre maximal (109) et la portion avant extrême (113)
0 mm < s ≤ 20 mm, de préférence 5 mm ≤ s ≤ 15 mm ;
et le rayon de courbure (r) de la zone de diamètre maximal (109) de la partie de tête (107) étant compris entre environ 0,1 mm et 6 mm, de préférence entre 1 mm et 4 mm.

9. Cheville à contre-dépouille selon une des revendications précédentes, **caractérisée en ce que** la partie de tête est réalisée par un procédé de formage à froid.
